# EUROPEAN PATENT APPLICATION

(11) **EP 4 764 864 A1**
(43) Date of publication of application: **24.06.2026**
(21) Application number: 24853442.2
(22) Date of filing: 09.07.2024
(51) Int. Cl.: G06F 11/14

(54) **PAGE FAULT RECOVERY METHOD, DEVICE, AND STORAGE MEDIUM**

(30) Priority: 16.08.2023 CN 202311046986
(71) Applicant: Cloud Intelligence Assets Holding (Singapore) Private Limited, Singapore 189554 (SG)
(72) Inventor: GUO, Kaijie, Hangzhou, Zhejiang 310030 (CN); LUO, Ning, Hangzhou, Zhejiang 310030 (CN)
(74) Representative: Barker Brettell LLP
(86) International application number: PCT/CN2024/104563
(87) International publication number: WO 2025/036027

(57) **Abstract**

A page fault recovery method, a device, and a storage medium are disclosed. The method includes: in response to detecting a page fault request initiated by any I/O device on a physical machine, determining a target virtual machine to which the page fault request belongs; selecting, for the target virtual machine from a plurality of physical cores, a target physical core configured to process a page fault request; and scheduling the page fault request to the target physical core, to process the page fault request by using the target physical core. By clearly identifying a virtual machine to which each IOPF occurring on a physical machine belongs, IOPF scheduling may be performed by using the virtual machine as a constraint condition. This can prevent IOPFs from being concentrated on a designated physical core in the physical machine for processing, and can effectively avoid perturbation to an unrelated virtual machine caused by the IOPF scheduling, thereby ensuring proper IOPF scheduling, and further improving the IOPF processing efficiency.

## Description

The present application claims priority to Chinese Patent Application No. 202311046986.1, filed with the China National Intellectual Property Administration on August 16, 2023 and entitled "PAGE FAULT RECOVERY METHOD, DEVICE, AND STORAGE MEDIUM", which is incorporated herein by reference in its entirety.

### TECHNICAL FIELD

The present application relates to the field of computer technologies, and in particular, to a page fault recovery method, a device, and a storage medium.

### BACKGROUND

An IOPF (IO Page fault, I/O page fault) is a page fault request sent by an I/O (Input/Output, input/output) device.

Currently, in a physical machine having a multi-core processor, page fault requests initiated by I/O devices connected to the physical machine are concentrated on a designated physical core for processing. This brings a huge working pressure to the physical core, and causes a queuing problem in page fault recovery, affecting page fault recovery efficiency.

### SUMMARY

A plurality of aspects of the present application provide a page fault recovery method, a device, and a storage medium, to improve IOPF processing efficiency.

An embodiment of the present application provides a page fault recovery method, applicable to a virtual machine monitor in a physical machine. The physical machine is equipped with an I/O device, and the physical machine includes a plurality of physical cores. The method includes:
in a case that a page fault request initiated by any I/O device on the physical machine is detected, determining a target virtual machine to which the page fault request belongs;
selecting, from the plurality of physical cores, a target physical core configured to process a page fault request for the target virtual machine; and
scheduling the page fault request to the target physical core, to process the page fault request by using the target physical core.

An embodiment of the present application further provides a computing device, including a memory, a processor, and a communication component, where
the memory is configured to store one or more computer instructions; and
the processor is coupled to the memory and the communication component, and is configured to execute the one or more computer instructions, to perform the foregoing page fault recovery method.

An embodiment of the present application further provides a computer-readable storage medium storing computer instructions. When the computer instructions are executed by one or more processors, the one or more processors are caused to perform the foregoing page fault recovery method.

In the embodiments of the present application, it is innovatively provided that a function of scheduling IOPFs is added to the virtual machine monitor. In response to detecting a page fault request initiated by any I/O device on a physical machine, a target virtual machine to which the page fault request belongs may be determined; a target physical core configured to process a page fault request may be selected from the plurality of physical cores for the target virtual machine; and the page fault request may be scheduled to the target physical core, to process the page fault request by using the target physical core. In this way, by clearly identifying a virtual machine to which each IOPF occurring on a physical machine belongs, IOPF scheduling may be performed by using the virtual machine as a constraint condition. This can prevent IOPFs from being concentrated on a designated physical core in the physical machine for processing, and can effectively avoid perturbation to an unrelated virtual machine caused by the IOPF scheduling, thereby ensuring proper IOPF scheduling, and further improving the IOPF processing efficiency.

### BRIEF DESCRIPTION OF THE DRAWINGS

The accompanying drawings described herein are used to provide further understanding of the present application, and constitute a part of the present application. Exemplary embodiments of the present application and descriptions thereof are used to explain the present application, and do not constitute an improper limitation to the present application. In the accompanying drawings:
FIG. 1 is a schematic flowchart of a page fault recovery method according to an exemplary embodiment of the present application.
FIG. 2a is a schematic logical diagram of a page fault recovery method according to an exemplary embodiment of the present application.
FIG. 2b is an exemplary schematic structural diagram of an IOPF scheduler according to an exemplary embodiment of the present application.
FIG. 3 is a schematic flowchart of a page fault recovery method according to another exemplary embodiment of the present application.
FIG. 4 is a schematic logical diagram of an optional implementation according to an exemplary embodiment of the present application.
FIG. 5 is a schematic structural diagram of a computing device according to another exemplary embodiment of the present application.

### DETAILED DESCRIPTION

To make objectives, technical solutions, and advantages of the present application clearer, the technical solutions of the present application are clearly and completely described below with reference to specific embodiments of the present application and corresponding drawings. Obviously, the described embodiments are merely a part of the embodiments of the present application, rather than all the embodiments. Based on the embodiments of the present application, all other embodiments obtained by a person of ordinary skill in the art without making any creative work fall within a scope of protection of the present application.

Currently, all IOPFs occurring on a physical machine are concentrated on a designated physical core for processing, causing a huge working pressure to the designated physical core, causing a problem of queuing of the IOPFs, and affecting the IOPF processing efficiency. Therefore, in some embodiments of the present application, it is innovatively provided that a function of scheduling IOPFs is added to a virtual machine monitor. In response to detecting a page fault request initiated by any I/O device on a physical machine, a target virtual machine to which the page fault request belongs may be determined; a target physical core configured to process a page fault request may be selected from the plurality of physical cores for the target virtual machine; and the page fault request may be scheduled to the target physical core, to process the page fault request by using the target physical core. In this way, by clearly identifying a virtual machine to which each IOPF occurring on a physical machine belongs, IOPF scheduling may be performed by using the virtual machine as a constraint condition. This can prevent the IOPFs from being concentrated on a designated physical core on the physical machine for processing, and can effectively avoid perturbation to an unrelated virtual machine caused by the IOPF scheduling, thereby ensuring proper IOPF scheduling, and further improving the IOPF processing efficiency.

The following describes the technical solutions provided in the embodiments of the present application in detail with reference to the accompanying drawings.

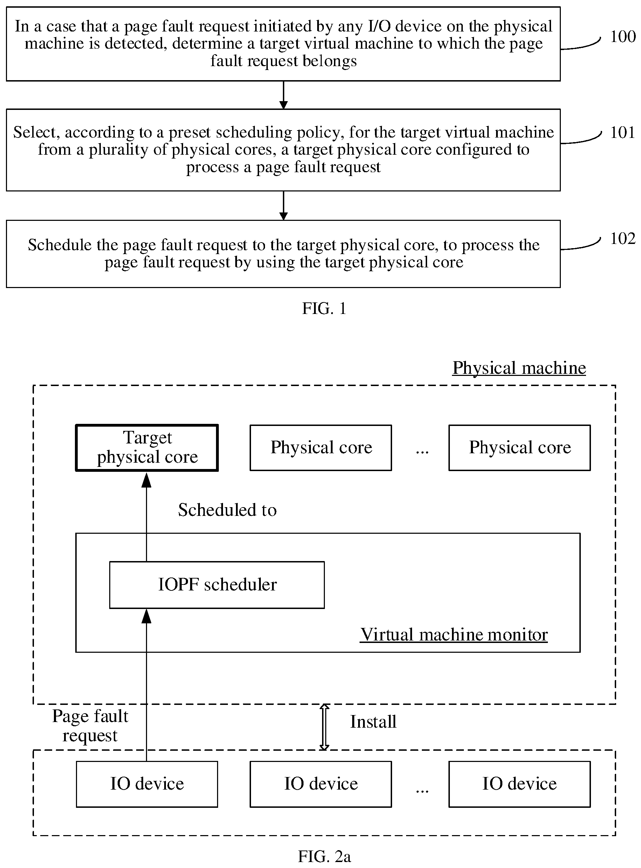

FIG. 1 is a schematic flowchart of a page fault recovery method according to an exemplary embodiment of the present application. FIG. 2a is a schematic logical diagram of a page fault recovery method according to an exemplary embodiment of the present application. Referring to FIG. 2a, the page fault recovery method provided in this embodiment may be implemented by a virtual machine monitor (virtual Machine monitor, VMM) in a physical machine. The virtual machine monitor may be an intermediate software layer running between basic physical resources and an operating system, may allow a plurality of operating systems and applications to share the physical resources, and may also be referred to as a Hypervisor.

The following briefly describes several technical concepts involved in the embodiments.

An IOPF (IO Page fault, I/O page fault) is a page fault request initiated by an I/O device. Currently, a growing number of I/O devices start to support a page request interface (Page Request Interface, PRI) protocol, so that the I/O devices may perform a page fault (Page Fault) request in a memory access scenario like a CPU. In this way, in a scenario such as cloud computing, a limitation that a memory of a physical machine accessed by an I/O device is not allowed to perform memory swap (Swap) may be eliminated. A page fault request initiated by an I/O device is described as an IOPF below.

A memory swap (Swap) technology is a technology of copying an infrequently used memory page to an external storage area such as a magnetic disk, and releasing a physical machine memory to increase available memory in a system. Using the memory swap technology can obviously improve a utilization rate of a physical machine memory. The technology plays an important role in a memory-high-density data center and cloud computing. Memory exchange may cause the foregoing page fault (Page fault).

Referring to FIG. 2a, the physical machine in this embodiment is equipped with an I/O device. The I/O device in this embodiment may be understood as a PCI device/a PCIe device, that is, an external device connected to the physical machine based on a bus protocol. A type of the I/O device installed on the physical machine is not limited in this embodiment. For example, the I/O device may be a network adapter device, a GPU (graphics processing unit, graphics processing unit), a DPU (Data Processing Unit, data processing unit), or the like. Moreover, the physical machine in this embodiment may include a plurality of physical cores. In addition, the physical machine further runs a virtual machine in this embodiment based on a virtualization technology. The foregoing virtual machine monitor may be configured to manage the virtual machine running on the physical machine.

In a conventional page fault recovery solution, processing on an IOPF is usually triggered by an external interrupt in an asynchronous manner. In addition, the interrupts are all processed by the designated physical core in the physical machine. In this way, as described in the background, page fault recovery of all IOPFs occurring on the physical machine is concentrated on the designated physical machine core, causing the foregoing problem of queuing of the IOPFs, and affecting IOPF processing efficiency.

Therefore, this embodiment provides that an IOPF scheduler is added to the virtual machine monitor, and the IOPF occurring on the physical machine is scheduled by using the added IOPF scheduler. Compared with a conventional solution in which a designated physical core centrally processes all IOPFs by default, IOPF processing efficiency can be effectively improved. The IOPF scheduler in this embodiment may interact with another component in a virtual machine controller, to implement an IOPF scheduling function.

Based on this, referring to FIG. 1, the IOPF scheduler provided in this embodiment may perform the following page fault recovery method:
step 100, in a case that an IOPF initiated by any I/O device on a physical machine is detected, determine a target virtual machine to which the IOPF belongs;
step 101, select, from a plurality of physical cores, a target physical core configured to process an IOPF for the target virtual machine;
step 102, schedule the IOPF to the target physical core, to process the IOPF by using the target physical core.

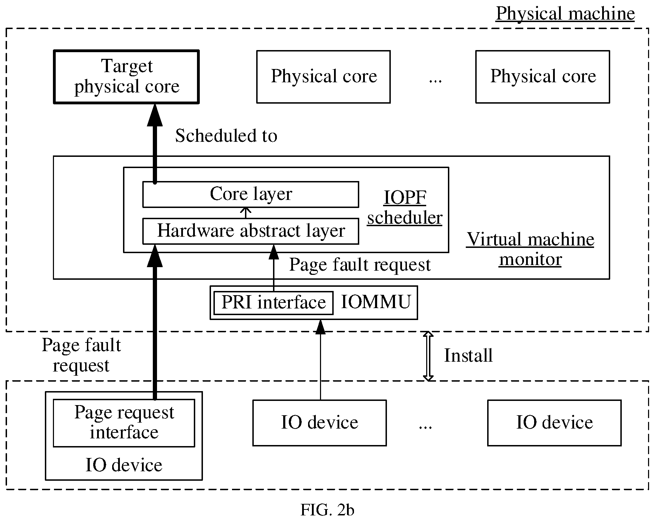

FIG. 2b is an exemplary schematic structural diagram of an IOPF scheduler according to an exemplary embodiment of the present application. Referring to FIG. 2b, in this embodiment, based on the IOPF scheduler, it is further proposed that the IOPF scheduler may be divided into at least two layers: a hardware abstraction layer and a core layer. The hardware abstraction layer is configured for interfacing with a page request interface used by the I/O device, to provide an IOPF sent from the hardware interface to the core layer.

In this embodiment, based on the hardware abstraction layer, monitoring of an IOPF in a plurality of IOPF implementation architectures may be supported. Therefore, in this embodiment, the hardware abstraction layer may include drivers for interfacing with page request interfaces in different IOPF implementation architectures. Referring to FIG. 2b, two exemplary IOPF implementation architectures may be as follows: an I/O device initiates the IOPF based on a PRI interface in an input/output memory management unit (IOMMU); and the I/O device has a built-in custom page request interface, and initiates the IOPF based on the built-in custom page request interface. Corresponding to the two exemplary IOPF implementation architectures, the hardware abstraction layer in this embodiment may include at least a driver for interfacing with a PRI interface in an IOMMU and a driver for interfacing with a custom page request interface built into an I/O device. Certainly, the hardware abstraction layer in this embodiment may further include more page request interface drivers for interfacing with page request interfaces in more IOPF implementation architectures. This is not enumerated herein. It should be noted that, in the two exemplary IOPF implementation architectures in FIG. 2b, the PRI interface in the IOMMU is a page request interface that conforms to a conventional page request interface (Page Request Interface, PRI) protocol. The built-in custom page request interface of the I/O device may conform a custom page request interface protocol. The custom page request interface protocol is not described in detail herein. This embodiment may support various custom page request interface protocols.

In this way, in this embodiment, based on the hardware abstraction layer in the IOPF scheduler, interfacing with more IOPF implementation architectures may be supported, instead of being limited to only the IOMMU architecture. In addition, hardware IOPFs received from different IOPF implementation architectures may be converted into consistent abstract IOPFs for provision to the core layer. In addition, other components in the VMM do not need to be modified.

Based on this, referring to FIG. 1, in step 100, the IOPF scheduler may monitor the IOPF initiated by the I/O device installed on the physical machine. Herein, as mentioned above, the IOPF may be the IOPF initiated by the I/O device based on the built-in custom page request interface of the I/O device, or may be the IOPF initiated based on the PRI interface in the IOMMU. Referring to FIG. 1, in step 100, when the IOPF is detected, the IOPF is not directly submitted to a default physical core used for page fault recovery in a conventional solution. Instead, as described in step 100, the target virtual machine to which the IOPF belongs is determined for the IOPF.

It should be noted that, in the conventional solution, a VMM does not pay attention to a virtual machine corresponding to an IOPF received by the VMM, because the VMM only needs to submit all IOPFs to a designated physical core by default, and the designated physical core only needs to process each IOPF indiscriminately, to ensure that a corresponding page fault is recovered, and both the VMM and the designated physical core do not need to pay attention to an initiator of the IOPF.

However, in this embodiment, it is innovatively provided that the target virtual machine to which the IOPF belongs is determined for the IOPF, to introduce the virtual machine as an important reference dimension and constraint condition for IOPF scheduling, which can effectively avoid perturbation to an unrelated virtual machine due to the IOPF scheduling solution introduced in this embodiment. The unrelated virtual machine may be understood as a virtual machine unrelated to a current IOPF.

In this embodiment, the target virtual machine to which the IOPF belongs may be determined by using a plurality of implementations. In an optional implementation, a scheduling domain (domain) corresponding to the IOPF may be determined; and based on scheduling domain tables (domain tables) corresponding to the virtual machines running on the physical machine, the target virtual machine to which the IOPF belongs is queried for, where the scheduling domain table corresponding to the target virtual machine includes the scheduling domain corresponding to the IOPF.

In a practical application, to implement device direct-through, scheduling domain tables (domain tables) are usually respectively configured for different virtual machines, to restrict VF (Virtual Function, virtual function) devices belonging to a scheduling domain table of a single virtual machine from sharing a same page table to perform direct memory access (Direct Memory Access, DMA), to ensure that page tables for implementing device direct-through access are different under different virtual machines, that is, it is ensured that device direct-through access under different virtual machines is isolated from each other. The VF device is a virtual device generated by virtualizing an I/O device, and these virtual devices may be installed on different virtual machines according to requirements. Background knowledge about the scheduling domain is not described in detail herein. In this implementation, the scheduling domain tables (domain tables) corresponding to the respective virtual machines running on the physical machine may be obtained from another component in the VMM, for example, a related component for interfacing with a device direct through-protocol such as VFIO, and this is not limited herein.

In this implementation, an exemplary solution of determining the scheduling domain corresponding to the IOPF may be: parsing out, from the IOPF, I/O device information corresponding to an I/O device triggering the IOPF; and querying, based on a mapping relationship table between I/O device identifiers and scheduling domains (domain), for a scheduling domain to which an I/O device identifier corresponding to an IOPF is mapped, and determining the scheduling domain to which the I/O device identifier corresponding to the IOPF is mapped as the scheduling domain corresponding to the IOPF. The mapping relationship table may be obtained from another component in the VMM. It should be understood that a scheduling domain list of a single virtual machine usually includes a plurality of scheduling domains (domain). The VF devices mentioned above are classified into the scheduling domain, and I/O devices corresponding to the VF devices are also classified into corresponding scheduling domains, thereby generating the mapping relationship table. However, in this exemplary solution, when initiating the IOPF based on the page request interface, the I/O device may add a source identifier (Source Identifier) of the I/O device in the IOPF, for example, the I/O device identifier may be BDF information, that is, information about a bus (BUS), a device (Device), and a function (Func), to support determining the corresponding scheduling domain for the IOPF by querying the mapping relationship table.

Based on this, in this implementation, the IOPF scheduler may have a resource management perspective within a scheduling domain (domain) equivalent to the VMM, so that the target virtual machine to which the current IOPF belongs may be determined by comparing the scheduling domain corresponding to the IOPF with the scheduling domain table corresponding to each virtual machine running on the physical machine.

It should be understood that technical details in the foregoing implementations are merely exemplary, and are not limited thereto. In addition, in this embodiment, another implementation may be used to determine the virtual machine to which the IOPF belongs, which is not limited thereto, and no more examples are provided herein.

Still referring to FIG. 1, after the target virtual machine to which the IOPF belongs is determined, in step 101, a target physical core configured to process the IOPF may be selected for the target virtual machine from a plurality of physical cores. Based on the target virtual machine introduced in step 100, it is provided in step 101 that a scheduling problem in which an IOPF is used as a unit is converted into a scheduling problem in which the target virtual machine is used as a unit. In this way, in step 101, the target physical core may be selected from physical cores that may be occupied by the target virtual machine on the physical machine, to process a current IOPF. The physical core that may be occupied by the target virtual machine may be understood as a physical core that is not occupied or locked by another virtual machine.

Based on this, in step 101, the target virtual machine is actually used as a scheduling unit, and that running of an unrelated virtual machine is not interfered with as much as possible is used as a scheduling constraint condition, to perform IOPF scheduling. In this way, the target physical core may be more properly selected, thereby effectively avoiding interference to unrelated virtual machines caused by the IOPF scheduling work.

For example, if the current IOPF belongs to a virtual machine A, scheduling the IOPF to a physical core occupied or locked by another virtual machine may be avoided as much as possible in step 101, to avoid a cross-virtual-machine attack caused by resource preemption for the another virtual machine. In a practical application, if resource preemption occurs, another virtual machine may possibly be faulty, and this embodiment can effectively avoid this problem.

There are a plurality of implementation solutions for selecting the target physical core in step 101. This is described in detail in the following embodiment, and no further limitation is imposed herein.

After the target physical core is selected, referring to FIG. 1, in step 102, the IOPF may be scheduled to the target physical core, to process the IOPF by using the target physical core. Processing the IOPF by using the target physical core refers to performing page fault recovery according to the IOPF by using the target physical core. In this embodiment, the page fault recovery process may include, but is not limited to, tasks such as allocating an idle physical page for a page fault, reading page fault data from an external storage device, and storing page fault data to the aforementioned allocated idle physical page. Details are not described herein.

In this embodiment, the IOPF may be scheduled to the target physical core by using a plurality of implementations. In an optional implementation, when a page fault interrupt corresponding to an IOPF is detected at a designated physical core in a physical machine, the designated physical core may be prohibited from starting a page fault recovery task corresponding to the IOPF; and the page fault recovery task is scheduled to the target physical core, where the designated physical core is a default core used for page fault recovery. The VMM has a function of sensing a page fault interrupt because the interrupt processing program is registered with the page fault interrupt by the VMM. Based on this, in the implementation, the page fault interrupt corresponding to the IOPF may be detected from a related component in the VMM. It should be noted that, the page fault interrupt and the foregoing page fault request (that is, the IOPF) are not the same concept. In addition to sending the IOPF, the I/O device may further send a page fault interrupt corresponding to the IOPF to the designated physical core. In this implementation, the page fault request may be triggered by the aforementioned input/output memory management unit IOMMU, or may be triggered by the custom page request interface built into the I/O device, or certainly may be triggered by another entity in another IOPF implementation architecture. This is not limited herein.

According to a conventional solution, the designated physical core receives the IOPF, and when receiving a corresponding page fault interrupt, stops other work to start a corresponding page fault recovery task for the page fault interrupt. In this implementation, the designated physical core is prohibited from starting the corresponding page fault recovery task, but schedules the page fault recovery task to the target physical core.

In an exemplary solution, the designated physical core may be controlled to remotely invoke the target physical core, to process the page fault recovery task by using the target physical core. The remote invoking technology between physical cores is not described in detail herein. Based on the remote invoking technology between physical cores, task migration may not be needed, and a target physical core may be triggered to execute a page fault recovery task by initiating a brief remote invoking request. Certainly, in this implementation, other exemplary solutions may alternatively be used to schedule the page fault recovery task to the target physical core. For example, the page fault recovery task on the designated physical core is entirely migrated to the target physical core. For another example, on one hand, the designated physical core may be controlled to send an interrupt for the current IOPF to the target physical core; on the other hand, identifier information of the target physical core may be notified to a memory management (Memory Management, MM) unit in the VMM, so that the memory management unit forwards the page fault request to the target physical core, thereby enabling the target physical core to start processing the IOPF when receiving the interrupt sent by the designated physical core. No more examples are provided herein.

In conclusion, in this embodiment, it is innovatively provided that a function of scheduling IOPFs is added to a virtual machine monitor is innovatively proposed. In response to detecting a page fault request initiated by any I/O device on a physical machine, a target virtual machine to which the page fault request belongs may be determined; a target physical core configured to process a page fault request may be selected from the plurality of physical cores for the target virtual machine; and the page fault request may be scheduled to the target physical core, to process the page fault request by using the target physical core. In this way, by clearly identifying a virtual machine to which each IOPF occurring on a physical machine belongs, IOPF scheduling may be performed by using the virtual machine as a constraint condition. This can prevent the IOPFs from being concentrated on a designated physical core on the physical machine for processing, and can effectively avoid perturbation to an unrelated virtual machine caused by the IOPF scheduling, thereby ensuring proper IOPF scheduling, and further improving the IOPF processing efficiency.

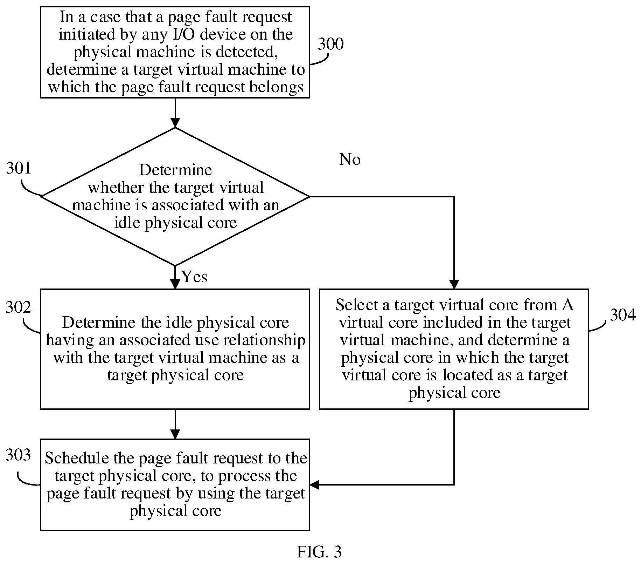

FIG. 3 is a schematic flowchart of a page fault recovery method according to another exemplary embodiment of the present application. Referring to FIG. 3, the method may include:
step 300, in a case that an IOPF initiated by any I/O device on a physical machine is detected, determine a target virtual machine to which the IOPF belongs;
step 301, based on an associated use relationship between an idle physical core and a virtual machine, determine whether the target virtual machine is associated with an idle physical core;
step 302, when the target virtual machine is associated with an idle physical core, determine the idle physical core having an associated use relationship with the target virtual machine as a target physical core;
step 303, schedule the IOPF to the target physical core, to process the IOPF by using the target physical core.

For step 300 and step 303, referring to the descriptions about step 100 and step 102 in the foregoing embodiment, and details are not described herein again.

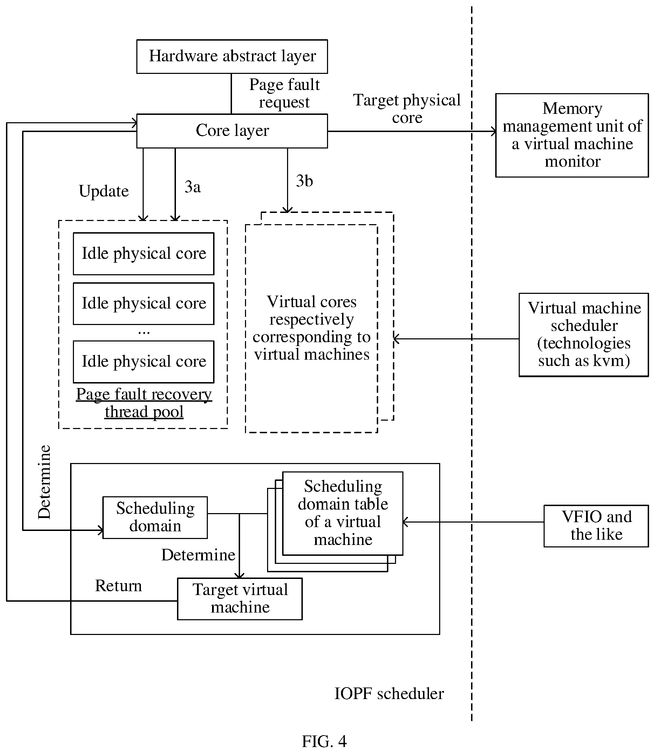

In this embodiment, an optional implementation of determining a target physical core is provided. FIG. 4 is a schematic logic diagram of the optional implementation.

Referring to the part 3a in FIG. 4, in this optional implementation, whether the target virtual machine is associated with an idle physical core may be determined based on the associated use relationship between the idle physical cores and the virtual machines; and if the target virtual machine is associated with an idle physical core, the idle physical core having the associated use relationship with the target virtual machine is used as the target physical core. The associated use relationship describes idle physical cores respectively usable by related virtual machines in the physical machine. A storage structure of the associated use relationship is not limited in this optional implementation. For example, in the associated use relationship, the idle physical cores respectively usable by the related virtual machines may be recorded by using key-value (key-value) pairs, where an identifier of the virtual machine may be used as a key (key), and an identifier of the idle physical core may be used as a value (value). Based on this, if the identifier of the target virtual machine is found in the associated use relationship, it may be determined that the target virtual machine is associated with an idle physical core. Otherwise, it may be determined that the target virtual machine is not associated with an idle physical core. Certainly, another storage structure may alternatively be used to implement the associated use relationship, and no more examples are provided herein.

In this optional implementation, an idle physical core on the physical machine may be learned from another component in the VMM. The idle physical core refers to a physical core that does not carry any virtual machine. It can be learned that processing the page fault request by using the idle physical core does not interfere with running of any virtual machine. Therefore, in this optional implementation, if the target virtual machine is associated with an idle physical core, the idle physical core associated with the target virtual machine may be directly used as the target physical core.

In this optional implementation, the associated use relationship between the used idle physical core and the virtual machine may be dynamically maintained. In an exemplary solution, a page fault recovery thread may be respectively created in the idle physical core in the physical machine, to form a page fault recovery thread pool; and a page fault recovery thread in a page fault recovery thread pool is allocated to the virtual machine running on the physical machine, to generate the associated use relationship between the idle physical cores and the virtual machines. The virtual machine exclusively occupies the page fault recovery thread allocated to the virtual machine, and an associated use relationship exists between the virtual machine and the idle physical core to which the page fault recovery thread allocated to the virtual machine belongs. In addition, the associated use relationship may be stored in memory of the physical machine, to be invoked by the IOPF in this embodiment as required, or certainly may be stored in an external storage device or an associated remote storage device of the physical machine. This is not limited in this embodiment. This embodiment supports storing the associated use relationship in any storage location that can be accessed by the physical machine and updated in time.

In this optional implementation, a page fault recovery thread pool shown in FIG. 4 is provided. It should be understood that a quantity of page fault recovery threads in the page fault recovery thread pool dynamically changes. By allocating the page fault recovery thread in the pool to the virtual machine in the physical machine, the associated use relationship can be indirectly established between the idle physical core to which the page fault recovery thread belongs and the virtual machine.

An exemplary page fault recovery thread allocation solution may be: if the quantity of page fault recovery threads in the page fault recovery thread pool is greater than or equal to a quantity of the virtual cores, the page fault recovery threads are respectively allocated to the virtual machines running on the physical machine, to generate the associated use relationship between the idle physical cores and the virtual machines; and if the quantity of page fault recovery threads in the page fault recovery thread pool is less than the quantity of the virtual cores, the page fault recovery threads are respectively allocated to a part of the virtual machines running on the physical machines, to generate the associated use relationship between the idle physical cores and the virtual machines, where a single virtual machine may include one or more virtual cores. In a practical application, one or more page fault recovery threads may be allocated to a single virtual machine. For example, when the virtual machine includes a plurality of virtual cores, a plurality of page fault recovery threads may be allocated to the virtual machine, to deal with a possible problem that a plurality of IOPFs concurrently occur.

In the exemplary page fault recovery thread allocation solution, two cases are considered. In one case, there are sufficient page fault recovery threads in the page fault recovery thread pool, and a sufficient quantity of page fault recovery threads may be allocated to each virtual machine. In this way, each virtual machine is associated with an idle physical core. In the other case, an insufficient quantity of page fault recovery threads in the page fault recovery thread pool certainly causes the page fault recovery threads to be incapable of being allocated to a part of virtual machines. In this case, the virtual machines in the physical machine may be sorted based on an indicator dimension such as priorities, and a page fault recovery thread is first allocated to a virtual machine with a higher priority. In this way, a part of virtual machines running on the physical machine may be associated with the idle physical core, and the remaining virtual machines may not be associated with an idle physical core.

In addition, in the exemplary solution, a change (for example, an event of creating a virtual machine occurs) of the idle physical cores in the physical machine may be sensed by interacting with another component in the VMM, and when it is sensed that the quantity of idle physical cores in the physical machine changes, the associated use relationship between the idle physical cores and the virtual machines is updated. In this way, accuracy of the associated use relationship can be ensured through low-frequency update.

Certainly, in this implementation, another solution may be used to maintain the associated use relationship between the idle physical cores and the virtual machines, and this is not limited thereto. In different solutions, related information needed to maintain the associated use relationship may be obtained through interaction with another component in the VMM.

Further, referring to FIG. 3 and the part 3b in FIG. 4, if it is determined in step 301 that the target virtual machine is associated with no idle physical core, the page fault recovery method provided in this embodiment may further include step 304: select a target virtual core from virtual cores included in the target virtual machine; and determine a physical core in which the target virtual core is located as the target physical core.

An exemplary solution for selecting a target virtual core may be: obtaining a load ratio corresponding to each virtual core included in the target virtual machine; and determining a virtual core whose load ratio meets a specified requirement as the target virtual core. Referring to FIG. 4, in a practical application, virtual machine schedulers used in a virtualization technology (for example, a technology such as KVM) may be queried for load ratios respectively corresponding to virtual cores included in target virtual machines. Further, in the exemplary target virtual core selection solution, if there is no virtual core whose load ratio meets a specified requirement, a virtual core hit in a current round is used as a target virtual core according to a polling mechanism. The polling mechanism may be implemented by using a technology such as round robin (round robin) or RSS (receive side scaling). This is not limited herein. By using a polling mechanism, the page fault request may be evenly dispersed to the physical cores in which the virtual cores are located included in the target virtual machine.

In the selection solution of the exemplary target virtual core, the specified requirement preset for the load ratio may include, but is not limited to, that the load ratio is the lowest, that the load ratio is lower than a specified load ratio threshold and duration exceeds a specified duration threshold, that a load ratio is lower than the specified load ratio threshold and no additional load being locked, or the like.

For example, if the specified requirement is "the load ratio is the lowest", a virtual core having the lowest load ratio may be selected from the virtual cores included in the target virtual machine as the target virtual core.

For example, if the specified requirement is "the load ratio is lower than a specified load ratio threshold and the duration exceeds a specified duration threshold", a virtual machine core that meets requirements in terms of both the load ratio and the duration may be selected from the virtual cores included in the target virtual machine as the target virtual core. The duration refers to duration in which the load ratio is continuously maintained below a specified loading ratio threshold. If a plurality of virtual cores meet the specified requirement, a virtual core having the longest duration may be further selected therefrom as the target virtual core. In this way, a virtual core with an excessively high load ratio or an insufficient duration of a low load ratio state will not be selected.

For example, if the specified requirement is "the load ratio is lower than the specified load ratio threshold and no additional load being locked", a virtual core whose load ratio is sufficiently low and whose additional load is not locked by another task may be selected from the virtual cores of the target virtual machine as the target virtual core. In a practical application, some tasks with a high priority may exist in the physical machine and pre-lock a part of the virtual cores, and the locked virtual cores cannot be used for another task. In this case, by using the specified requirement, a virtual core whose load ratio is sufficiently low but that is already locked by another task is not selected.

According to this, in this embodiment, a constraint at a virtual machine level and an actual load status of each physical core in the physical machine may be fully considered, to select a proper target physical core for the page fault request. In this way, most page fault requests may be scheduled to the idle physical core for processing, and a few page fault requests need to be scheduled to a non-idle physical core. Running requirements of other virtual machines are also fully considered. These page fault requests are scheduled to physical cores that the target virtual machine needs to occupy, and a physical core having a lowest load ratio is preferably selected from the physical cores, to better avoid interference to other virtual machines on the selected non-idle physical core.

It should be noted that some processes described in the foregoing embodiments and accompanying drawings include a plurality of operations that appear in a specific sequence. However, it should be clearly understood that these operations may not be performed in the sequence in which the operations appear in this specification, or may be performed in parallel. Sequence numbers of the operations, such as 801 and 802, are merely used for distinguishing between different operations, and the sequence numbers do not indicate any execution order. In addition, the processes may include more or fewer operations, and the operations may be performed in sequence or in parallel.

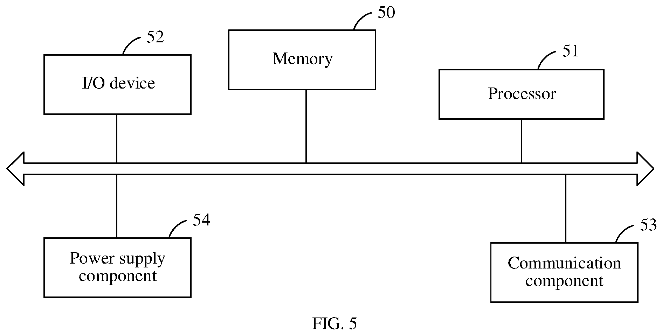

FIG. 5 is a schematic structural diagram of a computing device according to another exemplary embodiment of the present application. As shown in FIG. 5, the computing device includes a memory 50 and a processor 51. The computing device is equipped with an I/O device 52 and the computing device includes a plurality of physical cores. The processor 51 is a physical core configured to run a virtual machine monitor.

The processor 51 is coupled to the memory 50 and the I/O device 52, and is configured to execute a computer program in the memory 50, to:
determine a target virtual machine to which the page fault request belongs in a case that a page fault request initiated by any I/O device 52 on the physical machine is detected;
select, from the plurality of physical cores, a target physical core configured to process a page fault request for the target virtual machine; and
schedule the page fault request to the target physical core, to process the page fault request by using the target physical core.

In an optional embodiment, when determining the target virtual machine to which the page fault request belongs, the processor 51 may be specifically configured to:
determine a scheduling domain (domain) corresponding to the page fault request; and
query, based on a respective scheduling domain table (domain tables) corresponding to each virtual machine running on the physical machine, for the target virtual machine to which the page fault request belongs, where a scheduling domain table corresponding to the target virtual machine includes the scheduling domain corresponding to the page fault request.

In an optional embodiment, when selecting, from the plurality of physical cores, a target physical core configured to process a page fault request for the target virtual machine, the processor 51 may be specifically configured to:
determine, based on an associated use relationship between an idle physical core and a virtual machine, whether the target virtual machine is associated with an idle physical core; and
when the target virtual machine is associated with an idle physical core, determine the idle physical core having an associated use relationship with the target virtual machine as the target physical core.

In an optional embodiment, the processor 51 may be further configured to:
when the target virtual machine is not associated with an idle physical core, select a target virtual core from a virtual core included in the target virtual machine; and
determine a physical core in which the target virtual core is located as the target physical core.

In an optional embodiment, the processor 51 may be further configured to:
respectively create a page fault recovery thread in the idle physical cores in the physical machine, to form a page fault recovery thread pool;
allocate the page fault recovery thread in the page fault recovery thread pool to the virtual machine running on the physical machine, to generate an associated use relationship between the idle physical core and the virtual machine; and
the virtual machine exclusively occupies the page fault recovery thread allocated to the virtual machine, and an associated use relationship exists between the virtual machine and the idle physical core to which the page fault recovery thread allocated to the virtual machine belongs.

In an optional embodiment, when allocating the page fault recovery threads in the page fault recovery thread pool to the virtual machine running on the physical machine, to generate the associated use relationship between the idle physical core and the virtual machine, the processor 51 may be specifically configured to:
respectively allocate the page fault recovery thread to each virtual machine running on the physical machine when a quantity of page fault recovery thread in the page fault recovery thread pool is greater than a quantity of a virtual core, to generate an associated use relationship between the idle physical core and the virtual machine; and
respectively allocate the page fault recovery thread to a part of the virtual machines running on the physical machine when the quantity of page fault recovery threads in the page fault recovery thread pool is less than the quantity of the virtual core, to generate an associated use relationship between the idle physical core and the virtual machine, where
a single virtual machine includes one or more virtual cores.

In an optional embodiment, when selecting the target virtual core from the virtual cores included in the target virtual machine, the processor 51 may be specifically configured to:
obtain a load ratio corresponding to each virtual core included in the target virtual machine; and
determine a virtual core has a load ratio that meets a specified requirement as the target virtual core.

In an optional embodiment, the processor 51 may be further configured to:
if there is no virtual core whose load ratio is lower than the specified requirement, determine, according to a polling mechanism, a virtual core hit in a current round as the target virtual core.

In an optional embodiment, when scheduling the page fault request to the target physical core, the processor 51 may be specifically configured to:
prohibit, when a page fault interrupt corresponding to the page fault request is detected at the designated physical core in the physical machine, the designated physical core from starting a page fault recovery task corresponding to the page fault request; and
schedule the page fault recovery task to the target physical core, where
the designated physical core is a default core used for page fault recovery.

In an optional embodiment, when scheduling the page fault recovery task to the target physical core, the processor 51 may be specifically configured to:
control the designated physical core to remotely invoke the target physical core, to process the page fault recovery task by using the target physical core.

In an optional embodiment, the page fault request is triggered by an input/output memory management unit IOMMU, or is triggered by a custom page request interface built into the I/O device, where
a hardware abstraction layer and a core layer configured to schedule a page fault request are deployed in the virtual machine monitor, the hardware abstraction layer including a driver for interfacing with a PRI interface in the IOMMU and a driver for interfacing with a custom page request interface built into the I/O device, to provide the received page fault request to the core layer, and the core layer being configured to schedule the page fault request.

Further, as shown in FIG. 5, the computing device further includes other components such as a communication component 53 and a power supply component 54. Only some components are schematically provided in FIG. 5, which does not mean that the computing device includes only the components shown in FIG. 5.

It should be noted that the technical details of the foregoing embodiments of the computing device may refer to related descriptions in the foregoing method embodiments. To save space, details are not described herein again, but this should not cause a loss to the protection scope of the present application.

Correspondingly, an embodiment of the present application further provides a computer-readable storage medium storing a computer program. When the computer program is executed, steps that can be performed by a computing device in the foregoing method embodiments can be implemented.

The memory in FIG. 5 is configured to store the computer program, and may be configured to store various other data to support an operation on a computing platform. Examples of the data include instructions, contact data, phone book data, messages, pictures, videos, and the like of any application or method used for operating on the computing platform. The memory may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

The communication component in FIG. 5 is configured to facilitate communication in a wired or wireless manner between a device in which the communication component is located and another device. The device at which the communication component is located may access a wireless network based on a communication standard, such as a mobile communication network such as Wi-Fi, 2G, 3G, 4G/LTE, and 5G, or a combination thereof. In an exemplary embodiment, the communication component receives a broadcast signal or broadcast related information from an external broadcast management system through a broadcast channel. In an exemplary embodiment, the communication component further includes a near field communication (NFC) module, to promote short range communication. For example, the NFC module may be implemented based on a radio frequency identification (RFID) technology, an infrared data association (IrDA) technology, an ultra-wideband (UWB) technology, a Bluetooth (BT) technology, and other technologies.

The power supply component in FIG. 5 provides power to various components of a device in which the power supply component is located. The power supply component may include a power supply management system, one or more power supplies, and other components related to generating, managing, and allocating power for the device in which the power supply component is located.

A person skilled in the art should understand that the embodiments of the present application may be provided as a method, a system, or a computer program product. Therefore, the present application may be in a form of hardware-only embodiments, software-only embodiments, or embodiments combining software and hardware. In addition, the present application may be in a form of a computer program product implemented on one or more computer-available storage media (including but not limited to a magnetic disk memory, a CD-ROM, an optical memory, and the like) that include computer-available program code.

The present application is described with reference to flowcharts and/or block diagrams of the method, the device (system), and the computer program product according to the embodiments of the present application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specified function in one or more processes in the flowcharts and/or in one or more blocks in the block diagrams.

These computer program instructions may also be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or another programmable device provide steps for implementing a specific function in one or more processes in the flowcharts and/or in one or more blocks in the block diagrams.

It should be further noted that terms "comprise", "include", and any variants thereof are intended to cover a non-exclusive inclusion. Therefore, in the context of a process, a method, a commodity, or a device that includes a series of elements, the process, the method, the commodity, or the device not only includes such elements, but also includes other elements not specified expressly, or may include inherent elements of the process, the method, the commodity, or the device. Unless otherwise specified, an element limited by "include a/an..." does not exclude other same elements existing in the process, the method, the commodity, or the device that includes the element.

It should be noted that user information (including, but not limited to, user equipment information, user personal information, and the like) and data (including, but not limited to, data for analysis, stored data, displayed data, and the like) involved in the present application are both information and data that are authorized by a user or that are sufficiently authorized by all parties. In addition, relevant data needs to be collected, used, and processed by complying with relevant laws, regulations, and standards of relevant countries and regions, and a corresponding operation entry is provided for the user to select to authorize or reject.

The foregoing descriptions are merely embodiments of the present application, but are not intended to limit the present application. A person skilled in the art may make various modifications and variations to the present application. Any modification, equivalent replacement, or improvement made within the spirit and principle of the present application shall fall within the protection scope of the present application.

## Claims

1. A page fault recovery method, applicable to a virtual machine monitor in a physical machine, wherein the physical machine is equipped with an I/O device, the physical machine comprises a plurality of physical cores, and the method comprises:
in a case that a page fault request initiated by any I/O device on the physical machine is detected, determining a target virtual machine to which the page fault request belongs;
selecting, from the plurality of physical cores, a target physical core configured to process the page fault request for the target virtual machine; and
scheduling the page fault request to the target physical core, to process the page fault request by using the target physical core.

2. The method according to claim 1, wherein the determining the target virtual machine to which the page fault request belongs comprises:
determining a scheduling domain (domain) corresponding to the page fault request; and
querying, based on a respective scheduling domain table (domain tables) corresponding to each virtual machine running on the physical machine, for the target virtual machine to which the page fault request belongs, wherein a scheduling domain table corresponding to the target virtual machine comprises the scheduling domain corresponding to the page fault request.

3. The method according to claim 1, wherein the selecting, from the plurality of physical cores, the target physical core configured to process the page fault request for the target virtual machine comprises:
determining, based on an associated use relationship between an idle physical core and a virtual machine, whether the target virtual machine is associated with an idle physical core; and
when the target virtual machine is associated with the idle physical core, determining the idle physical core having the associated use relationship with the target virtual machine as the target physical core.

4. The method according to claim 3, further comprising:
when the target virtual machine is not associated with the idle physical core, selecting a target virtual core from a virtual core comprised in the target virtual machine; and
determining a physical core in which the target virtual core is located as the target physical core.

5. The method according to claim 3 or 4, further comprising:
respectively creating a page fault recovery thread in the idle physical core in the physical machine, to form a page fault recovery thread pool; and
allocating the page fault recovery thread in the page fault recovery thread pool to the virtual machine running on the physical machine, to generate the associated use relationship between the idle physical core and the virtual machine, wherein
the virtual machine exclusively occupies the page fault recovery thread allocated to the virtual machine, and the associated use relationship exists between the virtual machine and the idle physical core to which the page fault recovery thread allocated to the virtual machine belongs.

6. The method according to claim 5, wherein the allocating the page fault recovery thread in the page fault recovery thread pool to the virtual machine running on the physical machine, to generate the associated use relationship between the idle physical core and the virtual machine comprises:
respectively allocating the page fault recovery thread to each virtual machine running on the physical machine when a quantity of the page fault recovery thread in the page fault recovery thread pool is greater than or equal to a quantity of a virtual core, to generate the associated use relationship between the idle physical core and the virtual machine; or
respectively allocating the page fault recovery thread to a part of the virtual machines running on the physical machine when a quantity of the page fault recovery thread in the page fault recovery thread pool is less than a quantity of a virtual core, to generate the associated use relationship between the idle physical core and the virtual machine, wherein
a single virtual machine comprises one or more virtual cores.

7. The method according to claim 4, wherein the selecting the target virtual core from the virtual core comprised in the target virtual machine comprises:
obtaining a load ratio corresponding to each virtual core comprised in the target virtual machine; and
determining a virtual core has a load ratio that meets a specified requirement as the target virtual core.

8. The method according to claim 7, further comprising:
if no virtual core has a load ratio that meets the specified requirement exists, determining, according to a polling mechanism, a virtual core hit in a current round as the target virtual core.

9. The method according to claim 7, wherein the specified requirement comprises that a load ratio is lowest, that a load ratio is lower than a specified load ratio threshold and duration exceeds a specified duration threshold, or that a load ratio is lower than the specified load ratio threshold and no additional load being locked.

10. The method according to claim 1, wherein the scheduling the page fault request to the target physical core comprises:
prohibiting, when a page fault interrupt corresponding to the page fault request is detected in a designated physical core in the physical machine, the designated physical core from starting a page fault recovery task corresponding to the page fault request; and
scheduling the page fault recovery task to the target physical core, wherein
the designated physical core is a default core used for page fault recovery.

11. The method according to claim 10, wherein the scheduling the page fault recovery task to the target physical core comprises:
controlling the designated physical core to remotely invoke the target physical core, to process the page fault recovery task by using the target physical core.

12. The method according to claim 1, wherein the page fault request is triggered by an input/output memory management unit (IOMMU), or is triggered by a custom page request interface built into the I/O device, wherein
a hardware abstraction layer and a core layer configured to schedule a page fault request are deployed in the virtual machine monitor, the hardware abstraction layer comprises a driver for interfacing with a PRI interface in the IOMMU and a driver for interfacing with the custom page request interface built into the I/O device, to provide a received page fault request to the core layer, and the core layer is configured to schedule the page fault request.

13. A computing device, comprising a memory, a processor, and a communication component, wherein
the memory is configured to store one or more computer instructions; and
the processor is coupled to the memory and the communication component, and is configured to execute the one or more computer instructions, to perform the page fault recovery method according to any one of claims 1 to 12.

14. A computer-readable storage medium storing computer instructions, wherein when the computer instructions are executed by one or more processors, the one or more processors are caused to perform the page fault recovery method according to any one of claims 1 to 12.
